# EUROPEAN PATENT APPLICATION

(11) **EP 4 216 005 A1**
(43) Date of publication of application: **26.07.2023**
(21) Application number: 22153341.7
(22) Date of filing: 25.01.2022
(51) Int. Cl.: G05B 19/048, G05B 19/418, H04B 10/03, H04L 41/0668

(54) **CONTROLLED IO-LINK SYSTEM WITH UNIFIED FAIL-SAFE IMPLEMENTATION**

(71) Applicant: ifm electronic gmbh, 45128 Essen (DE)
(72) Inventor: Urbaniec, Jakub, 44300 Wodzislaw Slaski (PL); Kaskow, Mateusz, 45-867 Opole (PL); Dras, Pawel, 45-950 Opole (PL)
(74) Representative: Otten, Roth, Dobler & Partner mbB Patentanwälte

(57) **Abstract**

A controlled IO-link (IOL) system (S) for unified implementation and for running an plant with at least one actuator (4) is proposed, comprising a process controller (1), an IOL device (3), at least one actuator (4), wherein said IOL device (3) communicates with the at least one actuator (4) and with said process controller (1) to transfer codes, in particular data and/or commands, between the process controller (1) and the at least one actuator (4), a fail-safe control device (3A) comprising a storage device that contains at least one set of process data codes for running the at least one actuator (4), where said storage device contains at least one fail-safe data set for handling a fail-safe situation, and that the fail-safe control device (3A) comprises a communication system which provides codes that contain additional index parameter assigned to fail-safe data set for running the at least one actuator (4).

## Description

### Field of the invention:

The invention relates to a controlled IO-link (input-output-link, IOL) system for providing a unified fail-safe implementation for IO-Link devices and for running, for example, a plant with at least one actuator.

### Description of related art:

A typical fail situation is the loss of communication between IOL master on the one hand as far as, on the other hand, IOL device and/or PLC (programmable logic controller). For such a case, fail-safe mechanisms have been implemented in prior-art technology using, for example, an additional parameter as part of such an application which configures the state output depending on the setting on an individual level for a specific device. With another option, separate parameters for each output have been used for configuration in a fail-safe situation. Such a configuration requires acyclic commands for each output that must be programmed in an individual, device- and output-specific manner, and, hence, may be time-consuming to the user.

### Summary of the invention:

It is an object of the invention to provide a controlled IO-link (IOL) system that enables a faster and easier fail-safe configuration with reduced efforts for implementation.

This object is achieved by a controlled IO-link system according to claim 1, starting from a controlled IOL system of the type mentioned above. Advantageous embodiments are specified in the further dependent claims.

The invention provides a unified fail-safe implementation for IO link devices. The usual hardware setup of a typical application comprises a process controller, typically a PLC (programmable logic controller), which is connected to a device, such as an IO-link device, which is, furthermore, connected to an actuator, or, alternatively, the IO-link device is an actuator itself. In some developments, an intermediate device as an IOL master can be put into the physical communication line between process controller and IOL device. However, IO-link communication means a point-to-point communication between IO-link master and IO-link device.

According to the invention, the fail-safe mechanism presented is a response in case of a fail situation, e.g. the loss of communication of the IOL device to the process controller or an IOL master, interposed between process controller an IOL device. This fail-safe response shall provoke minimum possible danger or damage. One of the applications could be in particular a controlled machine-tool, where the loss of communication can easily result in damaging the workpiece or causing damage to the user. The actuator device however can also be damaged when it is stopped in a non-appropriate way.

The invention allows to reduce programming efforts for device-specific configuration or providing commands depending on the number of outputs. Furthermore it allows to reduce additional costs, for example to provide additional hardware related to wiring parallel respectively alternative communication routes and additional device to take over control.

In order to lower the potential risk of losing any communication between the devices and the actuator (in particular the loss of control-data transfer to the actuator), another strategy could be the installation of a second branch between the process controller and the actuator / actuators. Such a branch can only comprise another IO-link device and optionally another intermediate device, e.g. an IOL master switched between the process controller and the IOL device. If communication gets lost between the common process controller and one of the IOL devices, parameters can be transferred via the other branch as a parallel route. The additional IOL device must in such a case only be able to communicate with the corresponding actuators that usually communicate with another IOL device. The main disadvantage of such a configuration is the additional hardware and networking that must be provided. Furthermore, if the loss of communication originates from the process controller, e.g. from a defect of its interface, such a second branch may not help, since the actuator cannot be controlled by the process controller either in such a case.

The additional programming for new, specific devices or additional output configuration can, in general, cause conflicts with the existing software setup and unhandled exceptions in code. Such disadvantages in prior art can be avoided with present invention: It is based on the idea that process data and the corresponding code are sufficient to control the process, for example the running of the actuator, during regular and cyclic communication. Communication is the transfer of codes, i.e. code sequences, which are data and/or commands.

For this reason, a fail-safe device is provided that already comprises a storage device what contains at least one set of process data codes for enabling the actuator to run properly. According to the invention, said storage device contains at least one fail-safe data set for handling a fail-safe situation. It should be noted that said fail-safe control device can, according to one embodiment of the invention, use at least one set of process data codes as fail-safe data set, so it is even not necessary to program the desired function of the actuator in a failure case, but use existing process data codes saved in storage device. The same set of process data is used for the normal run and for fail-safe cases, and a fail-safe unification has been implemented.

The fail-safe control device takes over the job of the process controller to deliver a data, especially a command code to respond to the situation of failure and control the actuator.

On top of that, the fail-safe control device according to invention comprises a communication system which provides codes that contain additional index parameter assigned to fail-safe data set. Usually, it can be sufficient to always use 32B long codes on embedded site. Even all different actuators in use could be implemented, since some of them only require less than 32B of the process dataNormally, the maximum length of process-data output is 32B.

Two functions can be held available for implementing additional index parameters:
- a function validating and extending the provided pattern,
- a function to trim content of parameter to matching the length of the code.

In that way, the source of the process data is just changed under those specific conditions. Usual working procedure makes use of regular cyclic process data communication. As soon as fail-safe situation is triggered, the fail-safe device takes over instead of, e.g., the process controller and uses the fail-safe data set, which is saved in the storage device, which respectively can be the part of the process data codes. Fail-safe data set can be found with the additional index parameter.

For different developments and embodiments of the invention, communication of any component of the IOL system and the plant can also be wireless. Any component can be a mobile device, so that the invention can be applied in a flexible way. The IOL device can be a mobile phone, a tablet computer, whereas the actuator is for example a machine-tool. For another embodiment, the actuator can, of course, also be a mobile device. It is possible, for example, to use the camera or the vibration alarm of a mobile phone, a tablet computer or the like being considered as an actuator.

In the schematic circuit diagram for communication, the actuator is directly connected with the one of the IO-link devices or can be implemented into respectively be identical to the IO-link itself. As already explained, one of the most important failures is the loss of communication link to the process controller (e.g. PLC) .

Therefore it is advantageous to use or to implement the IO-link device as fail-safe device, too. The storage device of the IOL device can be used for fail-safe data set, and the index parameter assigned to corresponding fail-safe data can be directly processed. Hence, processing can be realized in a faster way.

Regular data code can, according to an embodiment, comprise the index parameter, so the index parameter can be in the process-data output and/or the other process-data communication, for example a 32-bit string.

Regular communication is based on cyclic data transfer and commands. The sender sends out a signal, and gets back a response from the receiving part. However, changing parameters can be done using acyclic commands:
- in creating and/or amending the fail-safe data and/or
- in amending and/or creating another additional index parameter.

Both options exist, but it is advantages to use the storage device with the fail-safe data set addressed by index parameters.

With further advantageous developments of the invention, it is possible to implement additional features. Up to that point, the process-data set is statically defined and fix. For more features, an extended solution with, for example, additional mask feature can be provided with new standardized functionalities, e.g. for visual monitoring. This variant allows also some non-static solutions. Masking and indicating functions assist the user to monitor the functioning of the plant and to immediately recognize different situations, especially failure situations.

In general, there are several options how to react in a failure case:
- using the older parameters and setting a control parameter to minimum value, mid-scale value maximum value, the last-used value;
- switching a device on / off;
- keeping the last value;
- using special default parameters.

According to another embodiment, at least one of the fail-safe data sets provides at least one additional modification to the configuration of the actuator, in particular a feature-specific mask indicator parameter, so any modification of configuration is in general possible and can be implemented directly without any lengthy programming process by the user.

However, an advantageous embodiment of the present invention uses an IO-link device which is able to detect any communication loss on the way between the process controller and said IOL device, which can for example be implemented in cyclic communication. Detection of a communication loss may trigger the fail-safe control device to communicate with one or more actuators and send out codes from the fail-safe data set to control running of the activators. An additional index parameter in the process-data structure among the group of possible, potentially used IO-link devices can contain a copy of all process data which is or can be used in case of fail-safe situation. With such a detection option, the communication loss can be monitored in real-time, so that communication loss can be found immediately and the fail-safe mode can be activated promptly.

In total, one unified set of indexes can commonly be used among all IOL actuators. The storage device provides one common set of process data codes for running the at least one actuator including a fail-safe data set for the actuators in a fail-safe situation, which helps to avoid programming for individual solutions. It is just necessary to know which value of process data is required in a fail-safe situation.

In general, with present invention, the modules of the system are unified and can easily be transferred to new devices, for example the fail-safe command to keep the module which has been used last. The modules are re-usable. The time necessary for development and testing can be reduced.

The system can also be transferred to another application, new transferable software submodules can easily be added, so there is a high degree of flexibility.

The codes in general can comprise bit, byte, word or mixed values.

All of the embodiments have in common that a fail-safe control device comprising a storage device that contains at least one set of process data codes for running the at least one actuator, where said storage device contains at least one fail-safe data set for handling a fail-safe situation, and that the fail-safe control device comprises a communication system which provides codes that contain additional index parameter assigned to fail-safe data set for running the at least one actuator. They allow to solve, seen from the point of view of development side, the problem of limiting the efforts on spending on programming and testing functionality for each device type, limiting the efforts on spending on learning and understanding new specific implementation for each separate device, which is important for customers' side, and presenting as simple and unified approach in relation to flexible and extendable functionalities. Furthermore, the invention provides a unified fail-safe implementation for IO-link devices. It makes it easier to implement different actuators and reduces the efforts spent on testing such systems.

Detailed description of the invention using embodiments:

An exemplary embodiment of the present invention is illustrated by way of example in the drawings and is explained in more detail below:
- Figure 1:: schematic overview of a controlled IOL system according to the invention, and
- Figure 2:: process data structure and index parameters.

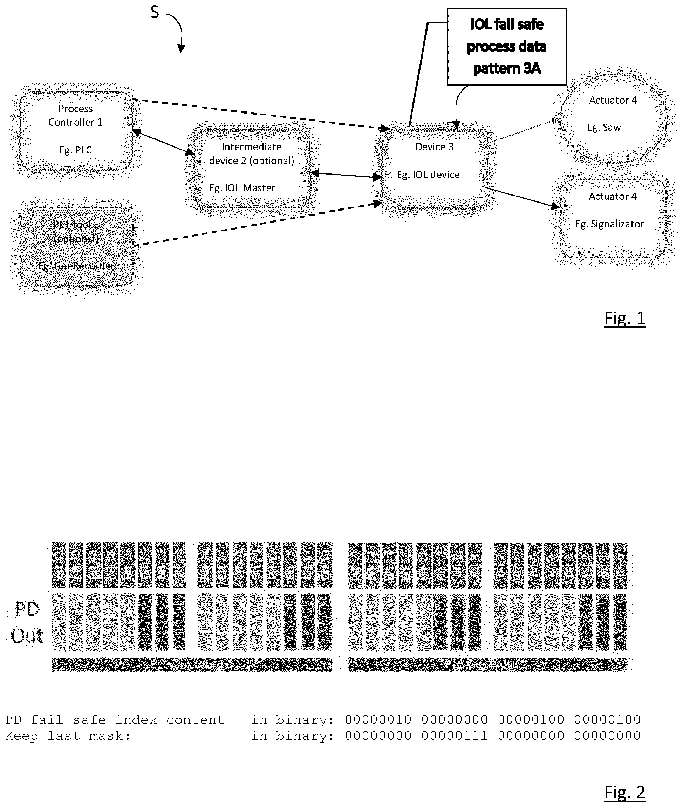

Fig. 1 shows a schematic overview of a controlled IO-link system S with a process controller 1 connected to an intermediate device 2 in form of an IOL master, which is connected to an IOL device for running two actuators 4. Here one of the actuators is a machine-tool, here a saw, the other one a signalizing tool. Both actuators 4 communicate with the IOL device 3. The IOL device 3 is designed as an IOL fail-safe control device 3A.

The IOL device 3, respectively the IOL fail-safe control device 3A contains a storage device for storing the process data codes, which has saved the index parameters, provided for fail-safe situations.

In addition, a PCT tool (port-configuration tool) is provided optionally, which can assist, together with the process controller 1 (PLC: programmable logic controller), to configure acyclic definitions of fail-safe parameters.

Nevertheless, in case of a communication loss with an interruption between communication channel of process controller an intermediate device. The index parameter is assigned to the codes to transfer as fail-save data.

Fig. 2 shows a schematic overview of the process data structure used for communication with PLC-Out Word 0 and PLC-Out Word 2. The codes containing fail-safe index parameters and commands, here to keep the last mask. Part of the code bits are process data (e.g. state parameters are the contents of Bit 0, Bit 1, Bit 2, Bit 8, Bit 9, Bit 10, Bit 16, Bit 17, Bit 18, Bit 24, Bit 25, Bit 26). Other code bits can be used as addresses for further index processing contents.

### References:

- 1: process controller (PLC)
- 2: intermediate device (IOL master)
- 3: IOL device
- 3A: fail-safe control device
- 4: actuator
- 5: PCT tool
- S: controlled IO-link system

## Claims

1. Controlled IO-link (IOL) system (S) for running an plant with at least one actuator (4), comprising:
• a process controller (1)
• an IOL device (3) and at least one actuator (4) or an IOL device with an integrated actuator function,
• wherein said IOL device (3) communicates with the at least one actuator (4) and with said process controller (1) to transfer codes, in particular data and/or commands, between the process controller (1) and the at least one actuator (4),
**characterized in that**
• a fail-safe control device (3A) is provided, comprising a storage device that contains at least one set of process data codes for running the at least one actuator (4),
• where said storage device contains at least one fail-safe data set for handling a fail-safe situation, and
• that the fail-safe control device (3A) comprises a communication system which provides codes that contain additional index parameter assigned to fail-safe data set for running the at least one actuator (4).

2. Controlled IOL system (S) according to claim 1, where said IOL system (S) and the plant are designed to communicate in a wireless form with each other.

3. Controlled IOL system (S) according to any of the preceding claims, where said IOL system (S) and/or the plant, in particular the at least one actuator, is/are designed as a mobile device.

4. Controlled IOL system (S) according to any of the preceding claims, where said fail-safe control device (3A) is configured to use at least one set of process data codes as fail-safe data set.

5. Controlled IOL system (S) according to any of the preceding claims, where the fail-safe device (3A) is implemented in to the IOL device (3).

6. Controlled IOL system (S) according to any of the preceding claims, where the index parameter is assigned to cyclic commands of the communication.

7. Controlled IOL system (S) according to any of the preceding claims, where the index parameter is part of a code of regular process-data output and/or process-data communication, in particular a 32-bit string.

8. Controlled IOL system (S) according to any of the preceding claims, where the code comprises at least one padding byte.

9. Controlled IOL system (S) according to any of the preceding claims, where the fail-safe control device (3A) can be reconfigured by an acyclic command:
• in creating and/or amending the fail-safe data and/or
• in amending and/or creating another additional index parameter.

10. Controlled IOL system (S) according to any of the preceding claims, where at least one of the fail-safe data sets provides at least one additional modification to the configuration of the at least one actuator (4), in particular a feature-specific mask indicator parameter.

11. Controlled IOL system (S) according to any of the preceding claims, where the IOL device (3) is designed to detect a communication break to the process controller (1) and launch the fail-safe control device (3A) to provide codes that contain additional index parameter assigned to fail-safe data set for running the at least one actuator.

12. Controlled IOL system (S) according to any of the preceding claims, where the process controller (1) and the IOL device (3) are connected via an intermediate device (2), in particular an IOL master.

13. Controlled IOL system (S) according to any of the preceding claims, where the storage device contains one common set of process data codes for running all the actuators (4) including a common fail-safe data set for handling a fail-safe situation.
